# EUROPEAN PATENT APPLICATION

(11) **EP 3 726 445 A1**
(43) Date of publication of application: **21.10.2020**
(21) Application number: 19170489.9
(22) Date of filing: 23.04.2019
(51) Int. Cl.: G06Q 10/08, G06Q 30/06, A47J 43/04

(54) **SYSTEM FOR MONITORING AND MANAGEMENT OF A CONSUMER PRODUCTS STOCK LIST**

(30) Priority: 18.04.2019 PT 2019115463
(71) Applicant: Modelo Continente Hipermercados, S.A., 4464-503 Senhora da Hora (PT)
(72) Inventor: FARIA ROCHA, DUARTE NUNO, 3800-423 AVEIRO (PT)
(74) Representative: do Nascimento Gomes, Rui

(57) **Abstract**

The present application describes a system for monitoring and management of a consumer products stock list, suitable for kitchen machines. The system is comprised by a consumer product supply platform, at least one kitchen machine, said kitchen machine further comprising a stock list management module comprising a detection unit, a memory unit and a communication unit. A communication link interconnects the communication unit of the kitchen machine's stock list management module to the consumer product marketing platform. With this system architecture, it is possible to automatically update the stock list containing consumer products as they are being used in the kitchen machine and, when needed, request for a replenishment of a specific ingredient or set of ingredients. Therefore, the intelligent management system proposed ensures that all the ingredients to be used in an automatic cooking program executed by a kitchen machine are in stock.

## Description

### TECHNICAL FIELD

The present application is enclosed in the area of kitchen machines, in particular kitchen machines which are electrically ran/operated, typically comprising a mixing cup in which automatic mixing actions are performed and operating with automatic cooking programs, and is related with a system for monitoring and management of a consumer products stock list.

### BACKGROUND ART

People easily loose track of the consumer products that they have at home, stored on different locations such as refrigerator, freezer, or pantry. As a result, the consumer products are forgotten until there is a need to use them again. In many occasions, at that time, the consumer products are already expired or do not exist in the amount needed to perform a certain cooking recipe. To deal with this problem, a couple of systems developed to virtual manage the household product inventory are already known.

As an example, document US20120101876 A1 describes a method of managing an inventory of household products through virtual storage, such as in a virtual refrigerator, freezer or pantry, using electronic devices such as a smart phone. The virtual storage includes at least one of a description of each product in the virtual storage; the date each product was purchased; the expiration date of each product; and the freshness level of each product, including whether each product is still fresh, needs to be used within a certain time period, or needs to be thrown out. Related features include generation of shopping lists, coupons and recipes for a consumer based on the products in virtual storage.

Document US20020198795 A1 describes a system for maintaining an inventory of items in a facility. Each item has attached thereto an identification tag containing item information. An identification tag reader at an entrance portal of the facility reads item information for each item entering the facility through the entrance portal. A computer maintaining an inventory database of items in the facility updates the inventory database in accordance with the item information read by the identification tag reader.

Document US6837436 B2 describes a consumer interactive shopping and marketing system. The system includes a portable data terminal for communicating information over a communication network. The present system has aspects that may be used within a shopping establishment or at a user's home.

However, all the cited art addresses the issue not considering an update of the stock list in a continuous-base, automatically, as the ingredients are being used, since all the solutions are based on inputs of the user, for adding ingredients to said stock list, and not considering necessarily what is being consumed. This leads to a generic approach, not placing the core of the solution in the kitchen appliance, such as a kitchen machine, that will actually use the ingredients. In fact, none of the kitchen machine technologies known from the art apparently combines its normal functionalities with the management of a stock list of ingredients used by the automatic cooking programs executed by it.

### SUMMARY

It is an object of the present application a system for monitoring and management of a consumer products stock list, suitable for kitchen machines. The system now developed is comprised by:
A consumer product supply platform, provided in a network-based system, comprising a database structure, preferably a relational database, containing i) a plurality of identification symbols uniquely associated with a plurality of consumer products offered for sale, and ii) a plurality of consumer products resource storehouses symbolically linked to each of said plurality of identification symbols;
At least one kitchen machine, said kitchen machine further comprising a stock list management module comprising:
   a detection unit, including detection means adapted to identify ingredients to be used in the kitchen machine, said detection unit in connection with the means for automatically measuring weight or volume in order to relate the detected ingredient with the respective physical parameter measured;
   a memory unit comprising a database structure, preferably a relational database, comprising a plurality of records forming a stock list, wherein each record is assigned to an ingredient to be detected by the detection unit, each record comprising two fields, a first field containing the identification symbol of said ingredient and a second field containing the physical parameter of said ingredient;
   a communication unit including means for transmitting and receiving data to and from the consumer product supply platform;
a communication link interconnecting the communication unit of the kitchen machine's stock list management module to the at least one consumer product supply platform.

In an advantageous configuration of the system now developed, the kitchen machine further comprises a control module programmed to operate the kitchen machine according to an automatic cooking program. Said control module further including an inference unit, in connection with the memory unit of the stock list management module, comprising:
memory means for storing operational data records of the kitchen machine, said records being related to execution of automatic cooking programs;
processing means configured to create a model-based or a rule-based inference engine based on said operational data records, in order to predict the execution of an automatic cooking program and its respective list of ingredients and physical parameters;
and wherein,
the memory unit of the stock list management module is further configured to generate a reply message to the stock list management module, reporting the scarcity of at least one ingredient based on an automated reasoning processing performed by the inference unit. Said automated reasoning processing is based on the inference engine and on the stock list stored on the database of the stock list management module's memory unit, being operable to compare the records of said database, related to ingredients and its respective physical parameters, with the list of the ingredients and respective physical parameters of the predicted automatic cooking program.

It is another object of the present application a method for automatically replenish items in a stock list, using the system for monitoring and management of a consumer products sock list of the present application. The method being comprised by the following steps:
- detecting the use of at least one ingredient to be used in the kitchen machine by means of the detection unit of the kitchen machine's stock list management module;
- updating the stock list, stored in the database structure of the kitchen machine's memory unit based on such detection, the update comprising, for said detected ingredients, updating the physical parameter of the ingredient;
- if the updated physical parameter of the ingredients in the stock list is below a predefined value, transmitting to a consumer product supply platform a digital replenishment request;
- processing the request by the consumer product supply platform, by searching the availability of the ingredients in at least one consumer product resource storehouse;
- if the ingredients are available in at least one resource storehouse, complete the request.

### DESCRIPTION OF FIGURES

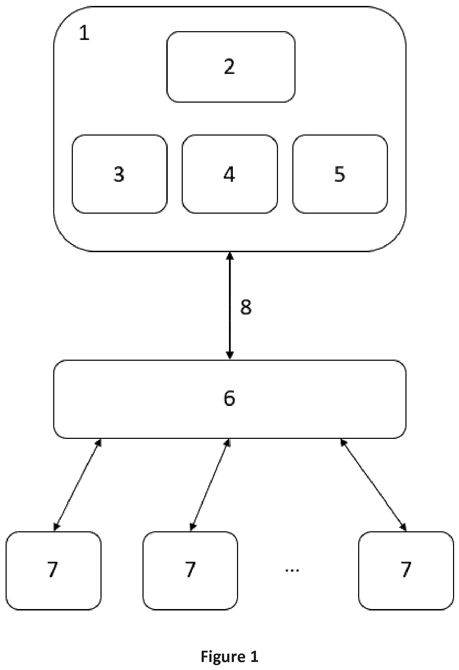

Figure 1 - representation of an embodiment of the system for monitoring and management of a consumer products stock list developed, wherein the reference signs represent:
   1 - kitchen machine appliance;
   2 - stock list management module;
   3 - memory unit, stock list;
   4 - detection unit;
   5 - communication unit;
   6 - consumer product supply platform;
   7 - consumer products resource storehouse;
   8 - communication link.

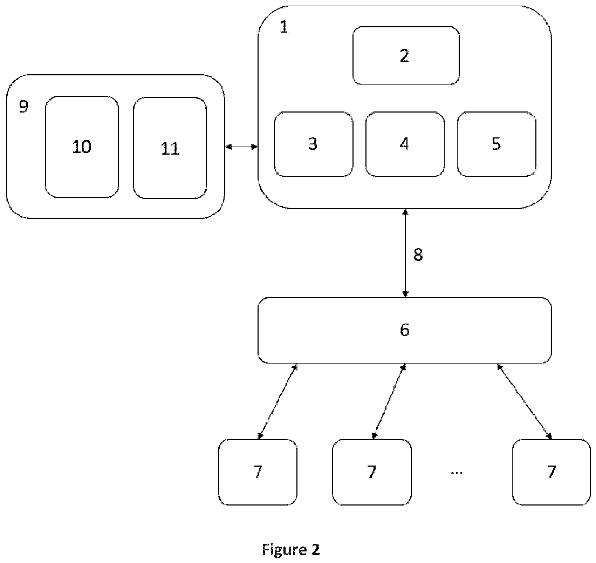

Figure 2 - representation of an alternative embodiment of the system for monitoring and management of a consumer products stock list developed, wherein the reference signs represent:
   1 - kitchen machine appliance;
   2 - stock list management module;
   3 - memory unit, stock list;
   4 - detection unit;
   5 - communication unit;
   6 - consumer product supply platform;
   7 - consumer products resource storehouse;
   8 - communication link;
   9 - control module;
   10 - memory means of the control module;
   11 - inference unit.

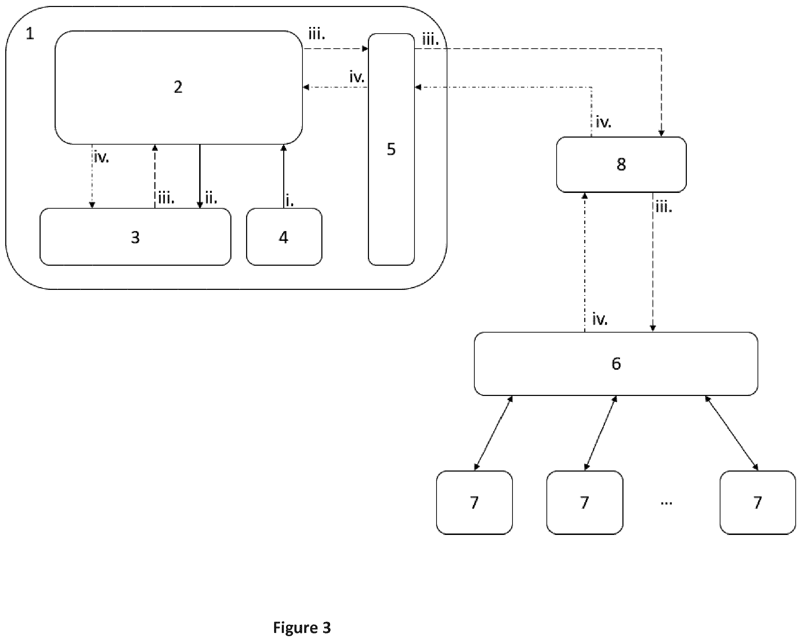

Figure 3 - representation of the operation method of the system for monitoring and management of a consumer products stock list developed, wherein the reference signs represent:
   1 - kitchen machine appliance;
   2 - stock list management module;
   3 - memory unit, stock list;
   4 - detection unit;
   5 - communication unit;
   6 - consumer product supply platform;
   7 - consumer products resource storehouse;
   8 - communication link;
      i.- ingredient detection by the detection unit (4) of the stock list management module (2);
      ii.- update request massage from the stock list management module (2) to the memory unit's stock list;
      iii.- digital replenishment request message sent from the memory unit's stock list to the stock list management module (2), which is directed to the consumer product supply platform (6), through the communication link (8);
      iv.- stock list update message sent from the consumer product supply platform (6) to the stock list management module (2), through the communication link (8); said message is converted into an update request message (ii.) by the stock list management module (2).

### DETAILED DESCRIPTION

The more general and advantageous configurations of the present application are described in the Summary. Such configurations are detailed below in accordance with other advantageous and/or preferred embodiments of implementation of the technology developed.

In an inventive aspect of the present application, it is described a system for monitoring and management of a consumer products stock list, suitable for kitchen machines. By kitchen machine one refers to a device electrically run and operable according to automatic cooking programs, being comprised by i) a mixing cup, ii) mixing means provided in the mixing cup, iii) a base station suitable for coupling of the mixing cup and which thereby is able to provide motion to the mixing means, and iv) means for automatically measuring weight or volume of ingredients placed into the mixing cup, from now on referred simply as a scale. In the context of the present application consumer products correspond to ingredients to be used in a kitchen machine, particularly ingredients to be inserted inside the mixing cup, in a certain quantity defined by at least one physical parameter such as volume or weight as measured by the scale of the kitchen machine.

The system is comprised by a consumer product supply platform, at least one kitchen machine, as described above, and further comprised by a stock list management module and a communication link, interconnecting the kitchen machine's stock list management module to the consumer product supply platform.

In an innovative aspect of the system, the consumer product supply platform is provided in a network-based system and comprises a database structure, preferably a relational database, containing i) a plurality of identification symbols uniquely associated with a plurality of consumer products offered for sale, and ii) a plurality of consumer products resource storehouses symbolically linked to each of said plurality of identification symbols. Virtually any type of consumer product can be registered with the platform by symbolically linking or relating its preassigned identification symbol with at least one resource storehouse. In one embodiment the identification symbol is an universal signal and can be a code provided in a tag associated to the ingredient. Said code is a n-dimensional code such as a UPC code - Universal Product Code - or an EAN code - European Article Number - or any other barcode symbology, or a Q.R code.

In an innovative aspect of the system, the stock list management module of a kitchen machine comprises a detection unit, a memory unit and a communication unit including means for transmitting and receiving data to and from the consumer product supply platform. The detection unit comprises detection means adapted to identify ingredients to be used in the kitchen machine, particularly ingredients to be inserted inside the mixing cup. The detection unit is in connection with the scale in order to relate the detected ingredient with the respective physical parameter measured. In one embodiment, the detection means of the detection unit are of optical type, preferably a laser scanner, a LED scanner, a digital camera-based scanner or an omnidirectional scanner. The memory unit comprises a database structure where a stock list of ingredients is stored. Said database, preferably a relational database, is comprised by a plurality of records forming said stock list, wherein each record is assigned to an ingredient to be detected by the detection unit. Each record is comprised by two data fields, wherein the first field contains the identification symbol of the ingredient and the second field contains the physical parameter of said ingredient. In another embodiment, a record is comprised by a third field corresponding to the expiration date of the ingredient.

In an innovative aspect of the system, the stock list management module is operable to generate an update request message to the memory unit's database, to update the sock list. Said update request message is emitted in response to information received from the detection unit, identifying an ingredient used in the kitchen machine, by means of its identification symbol, and the respective physical parameter measured. Additionally, the update request message can also be emitted by the stock list management module in response to a stock list update message received from the consumer product supply platform. The update message contains the identification symbol and the respective physical parameter of an ingredient acquired in the platform. Besides that, the stock list management module is also operable to generate a digital replenishment request message to the consumer product supply platform, containing information regarding to at least one identification symbol of an ingredient and the physical parameter of said ingredient, in response to a reply message sent by the memory unit. Once again, the physical parameter can be related to a weighable quantity or to a number of items depending on the type of ingredient. The digital replenishment request can be sent on a periodic-basis or on an event-basis. Considering a periodic basis, the digital replenishment is sent by the stock list management module in case of reception of at least one reply message by the memory unit. On an event-basis, the stock list management module sends the digital replenishment every time it is received a reply message from the memory unit.

In an innovative aspect of the system, the memory unit is operable to update the stock list stored in the database upon reception of an update request message from the stock list management module. The update process is executed by updating the second field of the record, related to a physical parameter, assigned to the ingredient identified in the update request message which can concern either to an ingredient detected by the detection unit or to an ingredient acquired from the consumer product supply platform. In the first case, the update process implies a decrease in the second field of the record assigned to the ingredient detected by the detection unit, in the exact quantity of what was measured by the scale - weight - or in the exact number of items that were used - volume. If the updated physical parameter of the ingredients in the stock list is below a predefined value, a reply message is transmitted to the stock list management module. Said predefined value represents a minimum quantity of an ingredient that can be configured for each type of ingredient. On the other hand, in the second case, the update process implies an increase in the second field of the record assigned to the ingredient acquired from the consumer product supply platform, said increase being in the right proportion of what was acquired.

In an innovative aspect of the system, the consumer product supply platform is operable to search for the availability of at least one ingredient and the respective physical parameters identified in the digital replenishment request, received from the stock list management module, in the at least one consumer products resource storehouse. If the referred ingredient or list of ingredients are available in said resource storehouses, the acquiring process is triggered which comprises the steps of sending the requested ingredients to the user and the payment of the service. Once the two steps are completed, the consumer product supply platform sends a stock list update message to the stock list management module in order to update the stock list of the kitchen machine.

In an advantageous embodiment, the kitchen machine of the system is further comprised by a control module and by a user interface circuit. The control module is programmed to operate the kitchen machine, and its respective elements, according to an automatic cooking program selected from a list of automatic cooking programs stored in memory means of such control module. A cooking program includes a list of ingredients to be used in such cooking program and the respective physical parameters and comprises the activation of the mixing means and/or heating means for predefined periods of time. For instance, to the preparation of a simple recipe such as whipped cream may correspond the cooking program of after the placing of 200g of cream, 30g of sugar and 2 vanilla beans inside the mixing cup - a mixer being provided inside the mixing cup - the activation of the mixing means/mixer for 2 minutes at a predefined speed of rotation of the mixer. In this example, all the ingredients used, such as the cream, the sugar and the vanilla beans correspond to ingredients of the stock list which are identified by the respective identification symbols. In one embodiment, before each ingredient is inserted inside the mixing cup the respective codes are read by the detection unit in order to perform the detection operation. Then the scale measures the weighable quantity of each ingredient as they are inserted in the mixing cup. Alternatively, the number of vanilla beans, which corresponds to a volume quantity, can be inserted by the user using the interface circuit. Once all ingredients are inside the mixing cup the automatic cooking program starts, and the stock list management module sends an update request message to the memory unit containing the list of ingredients and the respective physical parameters used.

In an advantageous embodiment, the stock list management module is in connection with the control module and the user interface circuit to enable the selection of automatic cooking programs from the list of automatic cooking programs according to the ingredients of the stock list.

In another advantageous embodiment, the user interface circuit comprises output means, preferably display means of LCD type able to display the stock list stored in the data base of the memory unit's stock list management module. The interface circuit comprises input means, preferably of touch and/or keyboard type and optical type, being operable to select an automatic cooking program from the list of automatic cooking programs, and to configure the parameters of the digital replenishment request message, regarding to the ingredients and its respective physical parameters, giving a user the opportunity for validating the request and for adding or removing ingredients identified in said request. In this regard, the input means of the user interface circuit can be used to add or remove records to the database forming the stock list. In case of an ingredient to be added to the stock list, the optical means can be used to read the code representing the identification symbol of the ingredient followed by the insertion of a weighable quantity or a number of items, by means of the input means of touch or keyboard type, forming the first and the second field, respectively, of a new record of the stock list. For this purpose, in one embodiment, the optical means of the interface circuit are the same of the detection unit, being operable according to a specific execution command selected from the user interface, to perform the operation of adding a new ingredient to the stock list. On the other hand, the process of removal of an ingredient can be performed by a user using the interface circuit. Besides that, the input means of the interface circuit can also be used to introduce additional information regarding a specific ingredient. Said information can include a description of the ingredient, its storage location, or special notes regarding the freshness level of the ingredients, including whether the products are still fresh or need to be used within a certain time period. In another particular embodiment of the system, the records of the database forming the stock list, further comprises a third field corresponding to the expiration date of the ingredient identified in the first field. In case of an ingredient of the stock list is already expired, the memory unit sends a reply message to the stock list management module, that in turn emits a digital replenishment request message to the consumer product supply platform to replace the expired ingredient.

In an innovative aspect of the system, the control module of the kitchen machine further comprises an inference unit that is in connection with the memory unit of the stock list management module. The inference unit comprises memory means and processing means. The memory means are adapted to store past operational data records of the kitchen machine, said records being related to the execution of automatic cooking programs and the respective list of ingredients. The processing means are configured to create a model-based or a rule-based inference engine based on the operational data records, with the purpose of identifying usage patterns in what concerns to automatic cooking programs and/or ingredients used, in order to predict the execution of an automatic cooking program or the use of a list of preferred ingredients. Therefore, the memory unit of the stock list management module is further configured to generate a reply massage to the stock list management module based on an automated reasoning process, performed by the inference unit, which is based on the inference engine, to identify user's habits based on operational patterns of the kitchen machine, and on the database of the stock list management module's memory unit, being operable to compare the records of said database, related to ingredients and its respective physical parameters, with a set of ingredients and respective physical parameters corresponding to a list of preferred ingredients or a list of ingredients of the predicted automatic cooking program.

In another advantageous embodiment, the interface circuit comprises a user interface platform adapted to provide a user access to the consumer product supply platform, through the communication unit of the stock list management module. In a particular embodiment, the user access is performed by means of a mobile device application configured to communicate with the user interface platform by means of a wide area network, local area network or personal area network. Through the user interface platform, the user is able to remotely access to the stock list for directly trigger the acquiring process of consumer products from the consumer products supply platform.

In an innovative aspect of the system, the control module of the kitchen machine further comprises a speech recognition module that is in connection with the memory unit of the stock list management module. The speech recognition module is used to acquire user instructions regarding the operation of the kitchen machine, particularly in what concerns to update the stock list stored in the memory unit of the stock list management module. In this regard, the speech recognition module to be included in the control module of the kitchen machine is similar to the ones already known in the art, being comprised by processing means adapted to extract from a speech waveform features such as frequencies, amplitudes or phase relationships which can be recognized as conforming to certain known patterns for each type of speech sound. By running a speech recognition software, the processing means of the speech recognition module, are able to extract these features, concerning to the voice of the user, in order to be measured, classified, stored and compared with various standards or reference patterns that are related to kitchen machine's operative and stock list management instructions. The stock list management instructions can be related to the insertion of ingredients into the stock list. For that the speech recognition software is able to identify standards or reference patterns related to vocalization of words associated to ingredients and quantities from a voice command. Said voice command is an audible signal that is collected by means of a sound transducer disposed in the form of a microphone which will convert it into electrical signals in order to be digitally processed and analysed by the processing means of the speech recognition module.

In an innovative aspect of the system, it allows the payment of the service related to the acquiring process triggered by a digital replenishment request message or by the action of a user interacting with the consumer product supply platform using the user interface platform. To accomplished that, the system is further comprised by an electronic payment processing authority which is in communication with an electronic payment gateway module to be added to the interface circuit. Besides that, the consumer product supply platform further comprises a merchant-hosting entity computer system associated with a permanent merchant payment processing account and in communication with the electronic payment gateway module. The electronic payment gateway module is used for processing payment of the consumer products included in the stock list update message or requested by the user, using an established electronic payment vehicle, preferably an online credit card e-commerce transaction. The payment information is entered in the merchant-hosting entity computer system to pay for the consumer products, and the electronic payment processing authority communicates with the electronic payment gateway to authorize or deny the transaction.

In an innovative aspect of the present application, it is described a method for automatically replenishing item in a stock list, using the system for monitoring and management of a consumer products stock list, suitable for kitchen machines, as described above. The referred method is comprised of a set of steps that will be described below. In a first step of the method, the detection unit of the kitchen machine's stock list management module, detects the use of at least one ingredient to be inserted inside the mixing cup. Such detection comprises the identification of the ingredient and a physical parameter of the ingredient, such parameter consisting of weight or volume, through the scale. In one embodiment, the detection step comprises reading of a code provided in a tag associated with the ingredient, and determining an ingredient of the stock list associated with such code, and measuring a weight or volume of the ingredients inserted in the mixing means of the kitchen machine. The second step involves updating the stock list, stored in the database structure of the kitchen machine's memory unit, based on such detection. The update comprising, for said detected ingredients, updating the physical parameter of the ingredient. In the third step, if the updated physical parameter of the ingredients in the stock list is below a predefined value, it is transmitted a digital replenishment request to the consumer product supply platform. The fourth step involves processing the request by the consumer product supply platform, by searching the availability of the ingredients requested in at least one consumer product resource storehouse. If the ingredients are available, in the fifth step, the request is completed and the stock list is updated.

In another innovative aspect of the present application, the digital replenishment request is alternatively transmitted to the consumer product supply platform based on an automated reasoning processing that predicts the execution of an automatic cooking program by the kitchen machine, said cooking program using a specific list of ingredients with respective physical parameters, or the use of a list of preferred ingredients and respective physical parameters. Said automated reasoning processing is adapted to compare the ingredients and its respective physical parameters of the stock list, with a list of the ingredients and respective physical parameters corresponding to preferred ingredients or ingredients of the predicted automatic cooking program.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. System for monitoring and management of a consumer products stock list, suitable for kitchen machines, such consumer products corresponding to a) ingredients to be used in said kitchen machine and b) at least one corresponding physical parameter of the ingredient, such as a weight or volume; such kitchen machine being electrically ran, being operable according to automatic cooking programs and comprising i) a mixing cup, ii) mixing means provided in the mixing cup, iii) a base station suitable for coupling of the mixing cup and which thereby is able to provide motion to the mixing means, and iv) means for automatically measuring weight or volume of ingredients placed into the mixing cup; the system being **characterised in that** it comprises:
- A consumer product supply platform, provided in a network-based system, comprising a database structure, preferably a relational database, containing i) a plurality of identification symbols uniquely associated with a plurality of consumer products offered for sale, and ii) a plurality of consumer products resource storehouses symbolically linked to each of said plurality of identification symbols;
- At least one kitchen machine, said kitchen machine further comprising a stock list management module comprising:
- a detection unit including detection means adapted to identify ingredients to be used in the kitchen machine, said detection unit in connection with the means for automatically measuring weight or volume in order to relate the detected ingredient with the respective physical parameter measured;
- a memory unit comprising a database structure, preferably a relational database, comprising a plurality of records forming a stock list, wherein each record is assigned to an ingredient to be detected by the detection unit, each record comprising two fields, a first field containing the identification symbol of said ingredient and a second field containing the physical parameter of said ingredient;
- a communication unit including means for transmitting and receiving data to and from the consumer product supply platform;
- a communication link interconnecting the communication unit of the kitchen machine's stock list management module to the consumer product supply platform.

2. System for monitoring and management of a consumer products stock list according to claim 1, wherein the stock list management module is operable to:
- Generate an update request message to the memory unit's database, to update the stock list:
- in response to information received from the detection unit, identifying an ingredient used in the kitchen machine and the respective physical parameter; said update request incorporating the identification symbol of said ingredient and the respective physical parameter measured;
- in response to a stock list update message received from the consumer product supply platform, containing the identification symbol and the physical parameter of at least one ingredient;
- Generate a digital replenishment request message to the consumer product supply platform, containing information regarding to at least one identification symbol of an ingredient and the physical parameter of said ingredient, in response to a reply message sent by the memory unit.

3. System for monitoring and management of a consumer products stock list according to claim 2, wherein the memory unit is operable to:
- Receive the update request message from the stock list management module;
- Update the database that stores the stock list, particularly, update the second field of the record assigned to the ingredient identified by the update request and/or add or remove records;
- Generate a reply message to the stock list management module containing the identification symbol of the ingredient to be replenished.

4. System for monitoring and management of a consumer products stock list according to claims 2 and 3, wherein the consumer product supply platform is operable to:
- Receive the digital replenishment request message from the stock list management module;
- Search the availability of the at least one ingredient and the respective physical parameters identified in the digital replenishment request, in the at least one consumer products resource storehouse;
- Return a stock list update message to the stock list management module.

5. System for monitoring and management of a consumer products stock list according to any of the previous claims, wherein the detection means of the detection unit are of optical type, preferably a laser scanner, a LED scanner, a digital camera-based scanner or an omnidirectional scanner; and wherein the identification symbol is a code provided in a tag associated to the ingredient, preferably the code consisting of a n-dimensional code, preferably a barcode or a Q.R code.

6. System for monitoring and management of a consumer products stock list according to any of the previous claims, wherein the kitchen machine further comprises:
- a control module programmed to operate the kitchen machine elements i) to iv) according to an automatic cooking program selected from a list of automatic cooking programs stored in memory means of such control module; and
- a user interface circuit operable to:
- display the stock list stored in the database of the memory unit's stock list management module;
- add or remove records to said database;
- configure the parameters of the digital replenishment request message, regarding to the ingredients and its respective physical parameters;
- select an automatic cooking program from the list of automatic cooking programs.

7. System for monitoring and management of a consumer products stock list according to claim 6, wherein the interface circuit comprises output means, preferably display means of LCD type, and input means, preferably of touch and/or keyboard type and optical type.

8. System for monitoring and management of a consumer products stock list according to claim 6 or 7, wherein:
an automatic cooking program comprises a list of ingredients to be used in such cooking program and the respective physical parameters; and
the stock list management module is in connection with the control module and the user interface circuit to enable the selection of automatic cooking programs from the list of automatic cooking programs according to the ingredients of the stock list.

9. System for monitoring and management of a consumer products stock list according to claim 8, wherein the control module of the kitchen machine further includes an inference unit, in connection with the memory unit of the stock list management module, comprising:
- memory means for storing operational data records of the kitchen machine, said records being related to execution of automatic cooking programs;
- processing means configured to create a model-based or a rule-based inference engine based on said operational data records, in order to predict the execution of an automatic cooking program and its respective list of ingredients and physical parameters;
wherein,
- the memory unit of the stock list management module is further configured to generate a reply message to the stock list management module based on an automated reasoning processing performed by the inference unit;
- said automated reasoning processing is based on the inference engine and on the stock list stored on the database of the stock list management module's memory unit, being operable to compare the records of said database, related to ingredients and its respective physical parameters, with the list of the ingredients and respective physical parameters of the predicted automatic cooking program.

10. System for monitoring and management of a consumer products stock list according to any of the claims 6-9, wherein the interface circuit comprises a user interface platform adapted to provide a user access to the consumer product supply platform, through the communication unit of the stock list management module, by means of a mobile device application configured to communicate with the user interface platform by means of a wide area network, local area network or personal area network.

11. System for monitoring and management of a consumer products stock list according to claims 6 to 10, wherein the control module of the kitchen machine further includes a speech recognition module; said module being in connection with the memory unit of the stock list management module and comprising a sound transducer and processing means; the processing means being adapted to run a speech recognition software that is configured to:
- extract speech waveform features from the speech signal collected by the transducer;
- process said speech waveform features in order to compare them with standards or reference patterns related to kitchen machine's operative and stock list management instructions.

12. System for monitoring and management of a consumer products stock list according to the previous claims, wherein:
- the user interface circuit further comprises an electronic payment gateway module for processing payment of the consumer products included in the stock list update message, using an established electronic payment vehicle, preferably an online credit card e-commerce transaction;
- the consumer product supply platform further comprises a merchant-hosting entity computer system associated with a permanent merchant payment processing account and in communication with the electronic payment gateway module, said computer system whereat a payment information from the established electronic payment vehicle is entered to pay for the consumer products;
and wherein the system further comprises:
- an electronic payment processing authority in communication with the electronic payment gateway module that authorizes the payment process.

13. Method for automatically replenishing items in a stock list, using the system for monitoring and management of a consumer products stock list, suitable for kitchen machines, of the claims 1 to 12, said method **characterised in that** it comprises the steps of:
- detecting the use of at least one ingredient to be used in the kitchen machine by means of the detection unit of the kitchen machine's stock list management, such detection comprising the identification of the ingredient and a physical parameter of the ingredient, such parameter consisting of weight or volume, through the means for automatically measuring weight or volume of ingredients;
- updating the stock list, stored in the database structure of the kitchen machine's memory unit, based on such detection, the update comprising, for said detected ingredients, updating the physical parameter of the ingredient;
- if the updated physical parameter of the ingredients in the stock list is below a predefined value, transmitting to a consumer product supply platform a digital replenishment request;
- processing the request by the consumer product supply platform, by searching the availability of the ingredients in at least one consumer product resource storehouse;
- if the ingredients are available in at least one resource storehouse, complete the request and update the stock list.

14. Method according to claim 14, wherein the step of detecting the use of a certain ingredient of the stock list comprises:
- the reading of a code provided in a tag associated with the ingredient and determining an ingredient of the stock list associated with such code, and
- measuring a weight or volume of the ingredient placed into the mixing cup through means for measuring weight or volume of ingredients provided in the kitchen machine.

15. Method according to any of the previous claims 13-14, wherein a digital replenishment request is alternatively transmitted to the consumer product supply platform based on an automated reasoning processing that predicts the execution of an automatic cooking program by the kitchen machine, said cooking program using a specific list of ingredients with respective physical parameters, or the use of a list of preferred ingredients and respective physical parameters, and wherein:
- said automated reasoning processing being adapted to compare the ingredients and its respective physical parameters of the stock list, with a list of ingredients and respective physical parameters corresponding to
i. ingredients of the predicted automatic cooking program or
ii. preferred ingredients.
